# EUROPEAN PATENT SPECIFICATION

(11) **EP 4 098 999 B1**
(45) Date of publication and mention of the grant of the patent: **11.06.2025**
(21) Application number: 20917211.3
(22) Date of filing: 02.12.2020
(51) Int. Cl.: G01N 9/00, G01N 11/16

(54) **SENSOR FOR VIBRATION DENSIMETER**
SENSOR FÜR VIBRATIONSDICHTEMESSER
CAPTEUR DE DENSITOMÈTRE À VIBRATIONS

(30) Priority: 31.01.2020 RU 2020104477
(43) Date of publication of application: 07.12.2022
(73) Proprietor: Demchenko, Aleksandr Petrovich, St.Petersburg, 191186 (RU); Balin, Nikolai Ivanovich, Sankt-Peterburg, 196158 (RU)
(72) Inventor: Demchenko, Aleksandr Petrovich, St.Petersburg, 191186 (RU); Balin, Nikolai Ivanovich, Sankt-Peterburg, 196158 (RU)
(74) Representative: Sloboshanin, Sergej
(86) International application number: PCT/RU2020/050363
(87) International publication number: WO 2021/154119

(56) References cited:
- WO-A1-2019/120768
- RU-C2- 2 393 456
- RU-U1- 169 441
- US-A- 3 523 446
- US-A- 3 874 221
- US-A- 4 922 745
- US-A1- 2008 156 093
- US-A1- 2013 139 576
- US-A1- 2018 031 460
- US-A1- 2018 031 460
- US-A1- 2018 120 210
- US-A1- 2018 120 217
- US-B2- 7 874 199
- US-B2- 9 927 341

## Description

### TECHNICAL FIELD

The invention relates to devices for measuring the density and viscosity of liquid media.

### PRIOR ART

Known are configurations of vibration density sensors with mechanical resonators, in which as a resonator is used a hollow cylindrical resonator.

US 9927341, published 27.03.2018, IPC G01N 9/00 discloses the configuration of a sensor for a vibration densimeter with a cylindrical resonator, comprising a unit for direct conversion of electrical vibrations into radial mechanical vibrations of the resonator walls and reverse conversion of mechanical vibrations of the resonator into electrical signals. The conversion unit contains one or more electroacoustic transducers, as a rule, piezoelectric elements.

US 2008/156093 A1 describes a density and viscosity sensor for measuring density and viscosity of fluid. The sensor comprises a resonating element arranged to be immersed in the fluid, an actuating/detecting element coupled to the resonating element, and a connector for coupling to the actuating/detecting element. The sensor further comprises a housing defining a chamber isolated from the fluid. The housing comprises an area of reduced thickness defining a membrane separating the chamber from the fluid. The actuating/detecting element is positioned within the chamber so as to be isolated from the fluid and mechanically coupled to the membrane. The resonating element arranged to be immersed in the fluid is mechanically coupled to the membrane. The membrane has a thickness enabling transfer of mechanical vibration between the actuating/detecting element and the resonating element.

US 2018/031460 A1 refers to a vibronic sensor and method of operation for monitoring the density and/or the viscosity of a medium in a container. The sensor comprises a mechanically oscillatable unit, a driving/receiving unit and an electronics unit. The driving/receiving unit is embodied, using an electrical exciter signal, to excite the mechanically oscillatable unit to execute mechanical oscillations, and to receive the mechanical oscillations and to convert them into an electrical, received signal. The electronics unit is embodied to produce the exciter signal such that a predeterminable phase shift is present between the exciter signal and received signal. Further, the electronics unit is embodied to set a first predeterminable phase shift and a second predeterminable phase shift, and to ascertain a first frequency and a second frequency corresponding to the predeterminable phase shifts, and to determine from the two frequencies the density and/or the viscosity of the medium using analytical formulas.

US 2013/139576 A1 describes a method for measuring the properties of a fluid. The method uses a torsionally resonant structure having a base structure; at least two parallel tines affixed to the base structure and projecting in the same direction from the base structure. The base structure is sufficiently compliant as to mutually couple the tines so that they behave as a single resonator when the tines are driven in synchronized manner. The torsionally resonant structure is immersed in the fluid to be measured and a tine driving mechanism is used to drive the tines torsionally. A tine movement sensing mechanism forms measurements of tine movement response to the driving mechanism and the measurements of tine movement to form measurements of fluid properties.

US 2018/120217 A1 refers to a method of measuring the amount of corrosion of a target material caused exposure to a fluid, over a period of time. The method utilizes a corrosion measuring device, which includes a resonator having a first surface area made of a material having a corrosion profile like that of the target material and having a second surface area made of material having a corrosion profile unlike that of the target material. Further, the corrosion measuring device comprises a transducer assembly, positioned to drive the resonator and sense resultant resonator motion, thereby producing a sense signal. In the method, the resonator is exposed to the target fluid over the period of time and the sense signal is analyzed over the period of time to determine changes in how the resonator responds to being driven by the transducer assembly, over time.

US 3 523 446 A refers to an apparatus for density determination of liquids and gases. The apparatus comprises a mechanical oscillator having V-shaped elastic elements supporting a hollow member for holding the object to be measured. Further, the apparatus comprises an excitation amplifier with circuit means for keeping the amplitude of the mechanical oscillator constant.

The closest technical solution is the configuration of a sensor for a vibration densimeter with a cylindrical resonator according to the patent RU 2506563, published 10.02.2014, IPC G01N 9/00. The sensor contains a sealed hollow body, in which by means of an annular membrane, which also ensures the impermeability of the inner cavity of the sensor relative to the medium under examination, a hollow cylindrical resonator is attached that is in contact with the medium under examination from the inner and outer sides of the resonator. For exciting and receiving mechanical vibrations of the cylindrical resonator, along the circumference of the membrane on the inner side of the housing are orthogonally arranged four piezoelectric elements. The configuration of the sensor provides for a contact of the inner and outer sides of the resonator with the medium under examination. For this purpose, special apertures and drillings are made in the sensor body.

### DISCLOSURE OF THE INVENTION

The technical result achieved by the given embodiments of the invention consists in increased accuracy of density measurements of a liquid using a simplified configuration of the sensor.

The sensor for the vibration densimeter according to the first embodiment comprises a hollow cylindrical body, on one base of which is hermetically attached a metal membrane. To the inner side of the membrane is attached a piezoelectric element, and to the outer side of the membrane is attached a mechanical vibration transducer, made in the form of a tuning fork, to which in the longitudinal direction is attached a hollow cylindrical resonator. Moreover, a base of the tuning fork is attached to the membrane, and the teeth of the tuning fork are attached to an base of the hollow cylindrical resonator.

In the present invention, the tuning fork is understood to be a well-known mechanical resonator made of a metal rod bent in the middle in the form of the Latin letter U. The base of the tuning fork is the center of the rod, and the ends of the bent rod are the teeth of the tuning fork. The intrinsic vibrational properties of the tuning fork are determined by the size, geometry and material of the rod. The tuning fork is a converter (transformer) of mechanical vibrations, both in direction and in magnitude. The transformation of vibrations in direction is shown in different orientations of the vibrational velocity vectors of the tuning fork base and its teeth. The vibrations of the tuning fork base have a smaller amplitude and greater strength compared to the amplitude and strength of the vibrations of the ends of the teeth, i.e. parts of the tuning fork have different mechanical resistances in relation to external sources and receivers of oscillations. In the present solution, it is proposed to use the tuning fork to adjust sources and receivers of mechanical vibrations that differ in internal mechanical resistances and directions of vibrations.

The increase in measurement accuracy in the present invention is achieved by reducing the additional mass of the resonance system, due to a reduction of the mass and number of parts connecting the cylindrical resonator to the membrane, while providing for the impermeability of the internal cavities of the sensor and better adjustment of the resonator with the excitation membrane.

This simplifies the configuration of the sensor, including the electromechanical transducer, i.e. the piezoelectric element, and increases the reliability of the sensor.

In particular cases of implementation of the first embodiment of the invention, the implementation of the essential features of the invention is specified.

Further, the vibration transducer, i.e. the tuning fork, is attached to the membrane by its base.

The sensor for the vibration densimeter according to the second embodiment comprises a hollow cylindrical body, on one base of which is hermetically attached a metal membrane, wherein to the inner side of the membrane is attached a piezoelectric element, and to the outer side of the membrane is attached a mechanical vibration transducer, made in the form of a tuning fork, to which in the transverse direction is attached a hollow cylindrical resonator. Moreover, a base of the tuning fork is attached to the membrane, and the teeth of the tuning fork are attached to the lateral surfaces of the hollow cylindrical resonator.

In the second embodiment, the measurement accuracy is also increased and the configuration of the sensor is simplified due to the above configuration characteristics. In this embodiment, when the teeth of the oscillation transducer are attached to the lateral surface of the cylindrical resonator, the cylindrical resonator is arranged transverse to axis of the sensor. This property of the configuration when using the sensor in a flow of a moving liquid allows reducing the frontal resistance of the cylindrical resonator to the liquid flow.

In particular cases of implementation of the second embodiment of the invention the vibration transducer can be attached to the membrane by the base.

In addition, the teeth of the vibration transducer are attached at equal distances from the ends of the cylindrical resonator.

### BRIEF DESCRIPTION OF THE DRAWINGS

FIG. 1 shows the configuration of the sensor for a vibration densimeter according to the first embodiment in a front view.
Figure 2 shows the configuration of the sensor for a vibration densimeter according to the first embodiment in a side view.
Figure 3 shows the configuration of the sensor for a vibration densimeter according to the second embodiment in a front view.
Figure 4 shows the configuration of the sensor for a vibration densimeter according to the second embodiment in a side view.
Fig. 5 shows a drawing illustrating the operation of the sensor.
FIG. 6 shows the change in the shape of the cylindrical resonator when oscillations are excited.
FIG. 7 shows a view of the sensor for a vibration densimeter according to the first embodiment.
FIG. 8 shows a view of the sensor for a vibration densimeter according to the second embodiment.

### EMBODIMENTS FOR CARRYING OUT THE INVENTION

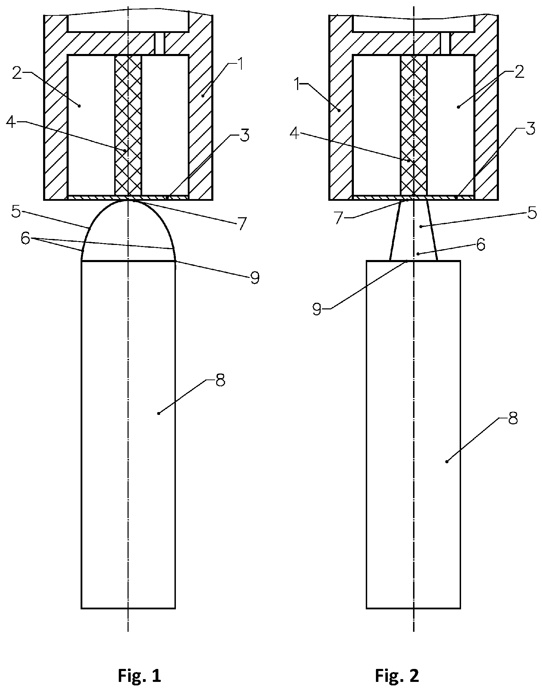

The sensor for a vibration densimeter (Fig. 1 - Fig. 4) comprises a hollow cylindrical body 1, on one base of which is rigidly and hermetically attached a metal membrane 3. Inside the cavity 2 of the hollow body 1 is arranged a piezoelectric element 4, attached on the inner side of the metal membrane 3. On the outer side of the metal membrane 3 is rigidly attached a vibration transducer, made in the form of a mechanical tuning fork 5, a base 7 of which is attached to the outer side of the membrane 3.

In the first embodiment of the invention, teeth 6 of the tuning fork 5 are attached to an base 9 of a cylindrical resonator 8. (Fig. 1 - Fig. 2).

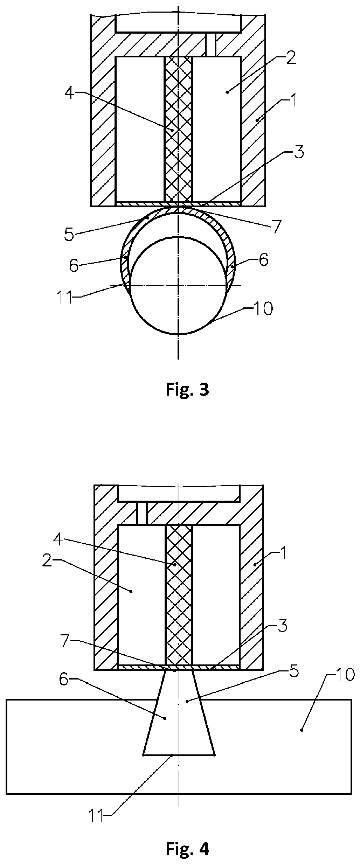

In the second embodiment of the invention, the teeth 6 of the tuning fork 5 are attached to the lateral surface 11 of the cylindrical resonator 10. (Fig. 3 - Fig. 4). In the best embodiment, the teeth 6 of the tuning fork 5 are attached at equal distances from the ends of the cylindrical resonator 10.

In the body 1 is also arranged an electronics unit (not shown in the figures), which generates an excitation signal for the piezoelectric element 4, and also serves to process the signals that occur in the piezoelectric element 4 after excitation of oscillations of the cylindrical resonator 8, 10.

The sensor in the first embodiment operates as follows.

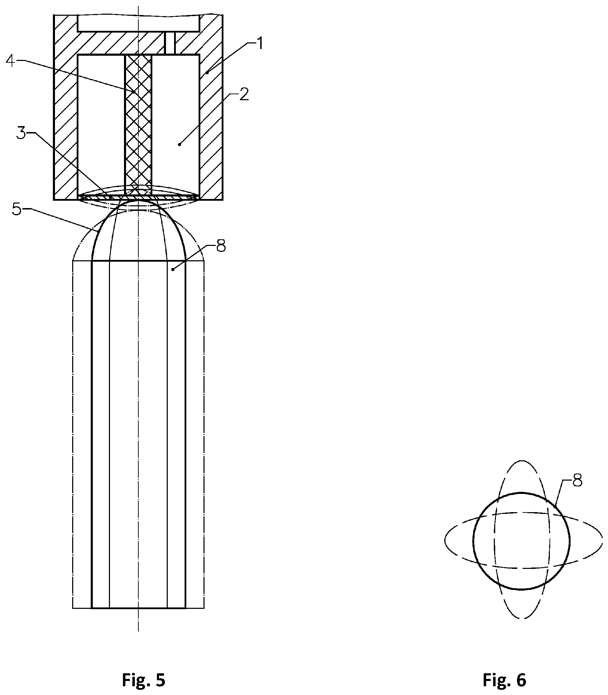

An excitation signal is sent from the electronics unit to the terminals of the piezoelectric element 4 (Fig. 5) that is connected to the metal membrane 3. This results in that the surface of the membrane 3 is periodically bent (curved), i.e. the surface of the membrane 3 will oscillate with the frequency of the excitation signal. The same movements will be made by the base 7 of the vibration transducer, i.e. the tuning fork 5 that is connected to the outer surface of the membrane 3. In accordance with known mechanism of vibrations of the tuning fork, when the base 7 of the tuning fork 5 moves upwards, the teeth 6 of the tuning fork converge, when the base 7 moves downwards, the teeth 6 diverge. Since the teeth 6 of the tuning fork are connected to the cylindrical resonator 8, its walls will also oscillate, but in the horizontal plane (i.e. in radial direction with respect to the axis of the cylindrical resonator) (Fig. 6) and the cylindrical resonator 8 will be radially excited.

Thus, vertical vibrations of the metal membrane 3 by means of the vibration transducer, i.e. the tuning fork 5, are transformed into horizontal (in the coordinates of the figure) vibrations of the walls of the cylindrical resonator 1.

Further, using a tuning fork as a vibration transducer optimizes the adjustment of the membrane with the cylindrical resonator, since small in amplitude longitudinal vibrations of the membrane that is rigidly connected to the tuning fork base are transformed into large in amplitude transverse vibrations of the tuning fork teeth and, accordingly, into large vibration amplitudes of the cylindrical resonator walls.

If the frequency of the excitation signal coincides with the natural frequency of the cylindrical resonator 8, a resonance will be observed, accompanied by an increase in the amplitude of oscillations of the walls of the cylindrical resonator 8. Vibrations of the walls of the resonator 8, in turn, are transmitted to the teeth 6 of the tuning fork 5 and, in accordance with the mechanism of vibrations of the tuning fork, lead to vertical vibrations of the base 7 of the tuning fork 5 and further, to vibrations of the membrane 3 and compression/extension of the piezoelectric element 4.

Thus, from the side of the terminals of the piezoelectric element 4, the sensor can be considered as an electrical circuit, the frequency properties of which (resonant frequencies, quality factor/attenuation) are determined by the configuration of the sensor and the properties of the environment in which the sensor is placed.

The electronics unit measures the frequency properties of the circuit and, on their basis, determines the density of the medium and its viscosity, since the quality factor, i.e. attenuation depends not only on the configuration of the sensor, but also on the viscosity of the medium (losses due to heating of oscillating particles), in which the cylindrical resonator is placed 8 .

These examinations can be carried out, for example, by the pulse method. To do this, the sensor should be periodically excited by a pulse signal. Examining the response to an impulse action, the electronic unit measures the natural frequency of the sensor in the medium and evaluates the attenuation of the medium. Based on these measured values is determined the density of the medium and its viscosity.

In the second embodiment of the sensor, its operation practically occurs the same way. Since the teeth 6 of the tuning fork 5 are attached to the lateral surface of the cylindrical resonator 10, the oscillations of its walls will also occur in the horizontal plane. The oscillations of the walls of the resonator 10 after its excitation are transmitted back to the teeth 6 of the tuning fork 5, and also lead to vertical vibrations of the base 7 of the tuning fork 5, and further to vibrations of the membrane 3 and compression/extension of the piezoelectric element 4.

This configuration embodiment of the sensor for a vibration densimeter is characterized by a reduction of the frontal resistance of the sensor when it is placed in a liquid or gas flow. Therefore, it can be recommended as a flow densimeter for a liquid or a gas.

### INDUSTRIAL APPLICABILITY

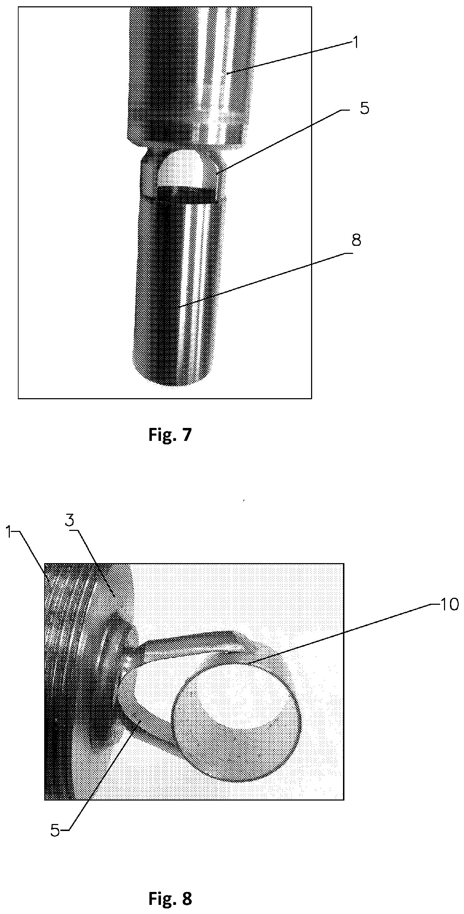

The drawings of Fig. 7 and Fig. 8 show the sensors of experimental vibration densimeters in two implementation embodiments. These densimeters offer high accuracy in density measurement, are easy to manufacture and to operate, and can be used to measure liquid and gaseous media, both at rest and in motion.

## Claims

1. Sensor for a vibration densimeter, comprising a hollow cylindrical body (1), on one base of which is hermetically attached a metal membrane (3), wherein to the inner side of the membrane (3) is attached a piezoelectric element (4), and to the outer side of the membrane (3) is attached a mechanical vibration transducer, made in the form of a tuning fork (5), **characterized by** the mechanical vibration transducer to which in the longitudinal direction is attached a hollow cylindrical resonator (8), wherein a base (7) of the tuning fork (5) is attached to the membrane (3), and the teeth (6) of the tuning fork (5) are attached to a base of the hollow cylindrical resonator (8).

2. The sensor according to claim 1, **characterized in that** the mechanical vibration transducer is attached to the membrane (3) by the base (7).

3. Sensor for a vibration densimeter, comprising a hollow cylindrical body (1), on one base of which is hermetically attached a metal membrane (3), wherein to the inner side of the membrane (3) is attached a piezoelectric element (4), and to the outer side of the membrane (3) is attached a mechanical vibration transducer, made in the form of a tuning fork (5), **characterized by** the mechanical vibration transducer to which in the transverse direction is attached a hollow cylindrical resonator (8), wherein a base (7) of the tuning fork (5) is attached to the membrane (3), and the teeth (6) of the tuning fork (5) are attached to the lateral surface of the hollow cylindrical resonator (8).

4. The sensor according to claim 3, **characterized in that** the vibration transducer is attached to the membrane (3) by the base (7).

5. The sensor according to claim 3, **characterized in that** the teeth (6) of the vibration transducer are attached at equal distances from the bases of the cylindrical resonator (8).

## Patentansprüche

1. Sensor für ein Schwingungsdichtemessgerät, umfassend einen hohlzylindrischen Körper (1), an dessen einer Basis eine Metallmembran (3) hermetisch befestigt ist, wobei an der Innenseite der Membran (3) ein piezoelektrisches Element (4) und an der Außenseite der Membran (3) ein mechanischer Schwingungswandler befestigt ist, ausgebildet in Form einer Stimmgabel (5), **gekennzeichnet durch** den mechanischen Schwingungswandler, an dem in Längsrichtung ein hohlzylindrischer Resonator (8) befestigt ist, wobei eine Basis (7) der Stimmgabel (5) an der Membran (3) befestigt ist und die Zähne (6) der Stimmgabel (5) an einer Basis des hohlzylindrischen Resonators (8) befestigt sind.

2. Sensor nach Anspruch 1, **dadurch gekennzeichnet, dass** der mechanische Schwingungswandler über die Basis (7) an der Membran (3) befestigt ist.

3. Sensor für ein Schwingungsdichtemessgerät, umfassend einen hohlzylindrischen Körper (1), an dessen einer Basis eine Metallmembran (3) hermetisch befestigt ist, wobei an der Innenseite der Membran (3) ein piezoelektrisches Element (4) und an der Außenseite der Membran (3) ein mechanischer Schwingungswandler befestigt ist, ausgebildet in Form einer Stimmgabel (5), **gekennzeichnet durch** den mechanischen Schwingungswandler, an dem in Querrichtung ein hohlzylindrischer Resonator (8) befestigt ist, wobei eine Basis (7) der Stimmgabel (5) an der Membran (3) befestigt ist und die Zähne (6) der Stimmgabel (5) an der Seitenoberfläche des hohlzylindrischen Resonators (8) befestigt sind.

4. Sensor nach Anspruch 3, **dadurch gekennzeichnet, dass** der Schwingungswandler über die Basis (7) an der Membran (3) befestigt ist.

5. Sensor nach Anspruch 3, **dadurch gekennzeichnet, dass** die Zähne (6) des Schwingungswandlers in gleichen Abständen zu den Basen des zylindrischen Resonators (8) angebracht sind.

## Revendications

1. Capteur pour un densimètre de vibrations, comprenant un corps cylindrique creux (1), sur une base dont une membrane métallique (3) est fixée de manière hermétique, dans lequel, sur le côté intérieur de la membrane (3), est fixé un élément piézoélectrique (4), et sur le côté extérieur de la membrane (3) est fixé un transducteur de vibrations mécanique, réalisé sous la forme d'une fourche de réglage (5), **caractérisé par** le transducteur de vibration mécanique auquel est fixé un résonateur cylindrique creux (8) dans la direction longitudinale, dans lequel une base (7) de la fourche de réglage (5) est fixée à la membrane (3), et les dents (6) de la fourche de réglage (5) sont fixées à une base du résonateur cylindrique creux (8).

2. Capteur selon la revendication 1, **caractérisé en ce que** le transducteur de vibration mécanique est fixé à la membrane (3) par la base (7).

3. Capteur pour un densimètre de vibrations, comprenant un corps cylindrique creux (1), sur une base dont une membrane métallique (3) est fixée de manière hermétique, dans lequel sur le côté intérieur de la membrane (3) est fixé un élément piézoélectrique (4), et sur le côté extérieur de la membrane (3) est fixé un transducteur de vibrations mécanique, réalisé sous la forme d'une fourche de réglage (5), **caractérisé par** le transducteur de vibration mécaniques auquel est fixé, dans la direction transversale, un résonateur cylindrique creux (8), dans lequel une base (7) de la fourche de réglage (5) est fixée à la membrane (3), et les dents (6) de la fourche de réglage (5) sont fixées à la surface latérale du résonateur cylindrique creux (8).

4. Capteur selon la revendication 3, **caractérisé en ce que** le transducteur de vibration est fixé à la membrane (3) par la base (7).

5. Capteur selon la revendication 3, **caractérisé en ce que** les dents (6) du transducteur de vibrations sont fixées à distances égales des bases du résonateur cylindrique (8).
